# EUROPÄISCHE PATENTSCHRIFT

(11) **EP 3 797 352 B1**
(45) Veröffentlichungstag und Bekanntmachung des Hinweises auf die Patenterteilung: **10.08.2022**
(21) Anmeldenummer: 19723101.2
(22) Anmeldetag: 09.05.2019
(51) Int. Cl.: G06F 8/654, G06F 11/14

(54) **VERFAHREN ZUM AUSTAUSCHEN EINES ERSTEN AUSFÜHRBAREN PROGRAMM-CODES UND EINES ZWEITEN AUSFÜHRBAREN PROGRAMM-CODES UND STEUERGERÄT**
METHOD FOR EXCHANGING A FIRST EXECUTABLE PROGRAM CODE AND A SECOND EXECUTABLE PROGRAM CODE, AND CONTROL UNIT
PROCÉDÉ D'ÉCHANGE D'UN PREMIER CODE DE PROGRAMME EXÉCUTABLE ET D'UN DEUXIÈME CODE DE PROGRAMME EXÉCUTABLE ET UNITÉ DE COMMANDE

(30) Priorität: 23.05.2018 DE 102018208096
(43) Veröffentlichungstag der Anmeldung: 31.03.2021
(73) Patentinhaber: Robert Bosch GmbH, 70442 Stuttgart (DE)
(72) Erfinder: PEPKE, Jan, 71686 Remseck A.N. (DE)
(86) Internationale Anmeldenummer: PCT/EP2019/061937
(87) Internationale Veröffentlichungsnummer: WO 2019/224010

(56) Entgegenhaltungen:
- US-A1- 2004 040 020
- US-B1- 6 442 067
- US-B1- 8 924 952

## Beschreibung

Die vorliegende Erfindung betrifft ein Verfahren zum Austauschen eines ersten ausführbaren Programm-Codes und eines zweiten ausführbaren Programm-Codes sowie ein Steuergerät, welches wenigstens eine Datenpaketsteuerungseinheit umfasst, welche dazu ausgebildet ist, gemäß diesem den ersten Programm-Code und den zweiten Programm-Code auszutauschen.

### Stand der Technik

Die US 6,442,067 B1 offenbart eine Wiederherstellungs-ROM für Array-Controller.

Die US 8,924,952 B1 offenbart ein Aktualisieren von Software unter Verwendung von mehreren Partitionen.

Die US 2004/0040020 A1 offenbart ein elektronisches Gerät mit einem Update-Agent.

### Offenbarung der Erfindung

Das erfindungsgemäße Verfahren zum Austauschen eines ersten ausführbaren Programm-Codes und eines zweiten ausführbaren Programm-Codes, wobei der erste ausführbare Programm-Code in Form von ersten Datenpaketen auf einem aktiven Speichermedium hinterlegt ist, wobei das aktive Speichermedium eine Vielzahl von ersten Speichersektoren umfasst, wobei jedes der ersten Datenpakete jeweils in einem ersten Speichersektor gespeichert ist, wobei der zweite ausführbare Programm-Code in Form von zweiten Datenpaketen auf einem passiven Speichermedium hinterlegt ist, wobei das passive Speichermedium eine Vielzahl von zweiten Speichersektoren umfasst, wobei jedes der zweiten Datenpakete jeweils in einem zweiten Speichersektor gespeichert ist, wobei das passive Speicherelement wenigstens einen freien Speichersektor umfasst, umfasst einen Schritt des Kopierens eines ersten Datenpakets aus einem ersten Speichersektor des aktiven Speichermediums in den wenigstens einen freien Speichersektor des passiven Speichermediums. Das Verfahren umfasst weiterhin einen Schritt des Leerens des einen ersten Speichersektors des aktiven Speichermediums, indem das eine erste Datenpaket aus dem einen ersten Speichersektor gelöscht wird, einen Schritt des Kopierens eines zweiten Datenpakets aus einem zweiten Speichersektor des passiven Speichermediums in den geleerten ersten Speichersektor des aktiven Speichermediums und einen Schritt des Leerens des einen zweiten Speichersektors des passiven Speichermediums, indem das eine zweite Datenpaket aus dem einen zweiten Speichersektor gelöscht wird. Das Verfahren umfasst zudem ein wiederholtes Ausführen der vorab genannten Schritte, bis alle ersten Datenpakete des ersten ausführbaren Programm-Codes auf dem passiven Speichermedium und alle zweiten Datenpakete des zweiten ausführbaren Programm-Codes auf dem aktiven Speichermedium hinterlegt sind, wobei das Kopieren eines ersten oder zweiten Datenpakets jeweils in einen vorab geleerten und/oder freien Speichersektor erfolgt.

Unter einem aktiven und/oder passiven Speichermedium ist beispielsweise eine sogenannte Flashbank zu verstehen, welche beispielsweise 2Mbyte Daten speichern kann, wobei auch andere Speichergrößen möglich sind. Das aktive und/oder passive Speichermedium ist aus Speichersektoren aufgebaut, welche jeweils eine Teilmenge an Daten speichern. Ein Speichersektor speichert beispielsweise 32KByte Daten. Unter einem aktiven Speichermedium ist beispielsweise ein Speichermedium zu verstehen, welches einen Programm-Code derart umfasst, dass dieser beispielsweise in Verbindung mit einem Prozessor zum Betreiben einer mechanischen und/oder elektronischen Einheit ausgeführt werden kann. Unter einem passiven Speichermedium ist beispielsweise ein Speichermedium zu verstehen, welches nicht in Verbindung mit einem Prozessor steht und/oder ausschließlich zum Speichern eines Programm-Codes dient. Unter einem Leeren eines Speichersektors ist ein Löschen aller Daten zu verstehen, welche von dem Speichersektor umfasst werden.

Das erfindungsgemäße Verfahren hat den Vorteil, dass ein Programm-Code gesichert wird, bevor ein neuer Programm-Code auf dem verwendeten Speichermedium gespeichert werden kann. Des Weiteren hat das erfindungsgemäße Verfahren den Vorteil, dass zum Austauschen durch den neuen Programmcode und zum Sichern des alten Programmcodes lediglich zwei in etwa gleich große Speichermedien ausreichend sind. Ein weiterer Vorteil des erfindungsgemäßen Verfahrens ist, dass zu jedem Zeitpunkt sowohl der erste Programm-Code als auch der zweite Programm-Code vorhanden sind und somit selbst bei einem unerwarteten Abbruch eines Austauschens des ersten und zweiten Programm-Codes, das Austauschen anschließend weitergeführt und/oder bei Bedarf rückgängig gemacht werden kann. Hierdurch ist das Austauschen besonders robust gegenüber Störungen.

Vorzugsweise werden das aktive Speichermedium und das passive Speichermedium von einem Steuergerät, welches zum Betreiben eines Fahrzeugs ausgebildet ist, umfasst und das Verfahren ist dazu ausgebildet, den ersten Programm-Code zum Betreiben des Fahrzeugs mittels des Steuergeräts und den zweiten Programm-Code zum Betreiben des Fahrzeugs mittels des Steuergeräts auszutauschen, wobei das Verfahren insbesondere dann durchgeführt wird, wenn das Steuergerät temporär nicht zum Betreiben des Fahrzeugs verwendet wird.

Vorzugsweise ist ein Schritt des Plausibilisierens des zweiten Programm-Codes nach dem Austauschen vorgesehen, wobei ein rückgängiges Austauschen ausgeführt wird, wenn das Plausibilisieren fehlschlägt, wobei insbesondere das rückgängige Austauschen gemäß dem erfindungsgemäßen Verfahren erfolgt.

Das erfindungsgemäße Steuergerät umfasst ein aktives Speichermedium, wobei das aktive Speichermedium eine Vielzahl von ersten Speichersektoren umfasst, wobei das aktive Speichermedium einen ersten ausführbaren Programm-Code zum Betreiben des Steuergeräts in Form von ersten Datenpaketen derart umfasst, dass jedes der ersten Datenpakete jeweils in einem ersten Speichersektor gespeichert ist. Weiterhin umfasst das Steuergerät ein passives Speichermedium, wobei das passive Speichermedium eine Vielzahl von zweiten Speichersektoren umfasst, wobei das passive Speichermedium einen zweiten ausführbaren Programm-Code zum Betreiben des Steuergeräts in Form von zweiten Datenpaketen derart umfasst, dass jedes der zweiten Datenpakete jeweils in einem zweiten Speichersektor gespeichert ist, wobei das passive Speicherelement wenigstens einen freien Speichersektor umfasst. Zudem umfasst das Steuergerät eine Datenpaketsteuerungseinheit, welche dazu ausgebildet, basierend auf dem erfindungsgemäßen Verfahren den ersten Programm-Code und den zweiten Programm-Code auszutauschen. Weiterhin umfasst das Steuergerät eine Ausführungseinheit, welche dazu ausgebildet ist, ein Betreiben des Steuergeräts mittels des jeweils von dem aktiven Speichermedium umfassten Programm-Code auszuführen.

Hierin zeigt sich der Vorteil, dass mittels der Datenpaketsteuerungseinheit auf robuste und sichere Art und Weise ein Austausch zwischen dem ersten ausführbaren Programm-Code und dem zweiten ausführbaren Programm-Code ausgeführt werden kann, ohne dass jeweils einer der beiden ausführen Programm-Codes vorab vollständig zwischengespeichert und gelöscht werden muss. Dies spart zusätzliche Speichereinheiten innerhalb des Steuergeräts und somit letztendlich auch Platz und Geld.

Vorzugsweise umfasst das Steuergerät eine Schnittstelle, welche dazu ausgebildet ist, den ersten und/oder zweiten Programm-Code zu senden und/oder zu empfangen. Hierunter ist beispielsweise zu verstehen, dass das Steuergerät mit einer externen Sende- und/oder Empfangseinheit verbunden ist und die externe Sende- und/oder Empfangseinheit beispielsweise kabellos den ersten und/oder zweiten Programm-Code als Datenwerte senden und/oder empfangen kann. Die gesendeten und/oder empfangenen Datenwerte wiederum werden zwischen den der Schnittstelle und der externen Schnittstelle beispielsweise mittels eines Kabels übertragen.

Hierin zeigt sich der Vorteil, dass der erste und/oder zweite ausführbare Programm-Code "over the air" - also kabellos und von einer beliebigen Quelle aus (Cloud, Server, etc.) - an das Steuergerät übertragen werden kann. Dadurch kann beispielsweise ein zweiter ausführbarer Programm-Code als Update des ersten ausführbaren Programm-Codes an das Steuergerät übertragen werden, welcher zum Betreiben des bereits verbauten Steuergeräts notwendig ist.

Vorzugsweise wird das Steuergerät von einem Fahrzeug umfasst. Zudem ist das Steuergerät dazu ausgebildet, das Fahrzeug mittels des ersten und/oder zweiten Programm-Codes zu betreiben.

Gerade in (Straßen-) Fahrzeugen werden mehr und mehr Steuergeräte benötigt, welche kontinuierlich Fahrassistenzfunktionen und/oder sicherheitssteigernde Funktionen und/oder weitere Funktionen ausführen. Dabei ist es immer wieder notwendig, dass ein hierzu verwendeter ausführbarer Programm-Code aktualisiert und/oder ausgetauscht werden muss. Der aktualisierte Programmcode kann hierbei "over the air" - also kabellos und von einer beliebigen Quelle aus (Cloud, Server, etc.) - an das Steuergerät übertragen werden. Wird das Steuergerät beispielsweise von einem Fahrzeug umfasst, kann der Austausch des Programmcodes somit außerhalb einer Werkstatt erfolgen, wobei die Sicherheit sowie die Funktionalität des Fahrzeugs nach einem erfolgreichen oder misslungenen Austausch nicht gemindert werden. Hierbei ist das erfindungsgemäße Steuergerät, welches insbesondere die Datenpaketsteuerungseinheit umfasst, aufgrund der bereits genannten Ausführungen von großem Vorteil.

Vorzugsweise umfasst das Steuergerät eine Erfassungseinheit, welche erfasst, ob das Fahrzeug abhängig von dem ersten und/oder zweiten Programm-Code mittels des Steuergeräts betrieben wird, wobei die Datenpaketsteuerungseinheit nur dann ein Austauschen des ersten Programm-Codes und des zweiten Programm-Codes ausführt, wenn das Fahrzeug nicht abhängig von dem ersten und/oder zweiten Programm-Code mittels des Steuergeräts betrieben wird.

Hierin zeigt sich der Vorteil, dass das Austauschen des ersten ausführbaren Programm-Codes und des zweiten ausführbaren Programm-Codes nur erfolgt, wenn das Fahrzeug das Steuergerät nicht aktiv verwendet. Dies ist insbesondere der Fall, wenn das Fahrzeug beispielsweise nicht bewegt wird bzw. abgestellt ist. Dadurch ist gewährleistet, dass aufgrund der Nichtverwendung des Steuergeräts kein Sicherheitsrisiko für das Fahrzeug und/oder Insassen des Fahrzeugs entsteht.

Vorzugsweise umfasst das Steuergerät eine Plausibilisierungseinheit, welche dazu ausgebildet ist, ein Plausibilisieren des zweiten Programm-Codes nach dem Austauschen auszuführen, wobei mittels der Datenpaketsteuerungseinheit ein rückgängiges Austauschen ausgeführt wird, wenn das Plausibilisieren fehlschlägt.

Dies steigert vorteilhafterweise die Zuverlässigkeit des Steuergeräts.

Das Steuergerät kann ausdrücklich weitere Komponenten umfassen, welche zum Betreiben des Steuergeräts notwendig sind, die aber aufgrund mangelnder Relevanz - bezogen auf die eigentliche Erfindung - nicht weiter aufgeführt und erläutert werden.

Vorteilhafte Weiterbildungen der Erfindung sind in den Unteransprüchen angegeben und in der Beschreibung aufgeführt.

### Zeichnungen

Ausführungsbeispiele der Erfindung sind in den Zeichnungen dargestellt und werden in den nachfolgenden Beschreibungen näher erläutert. Es zeigen:
Figur 1 ein schematisches Ausführungsbeispiel des erfindungsgemäßen Steuergeräts;
Figur 2 ein schematisches Ausführungsbeispiel des erfindungsgemäßen Verfahrens; und
Figur 3 ein Ausführungsbeispiel des erfindungsgemäßen Verfahrens in Form eines Ablaufdiagramms.

### Ausführungsformen der Erfindung

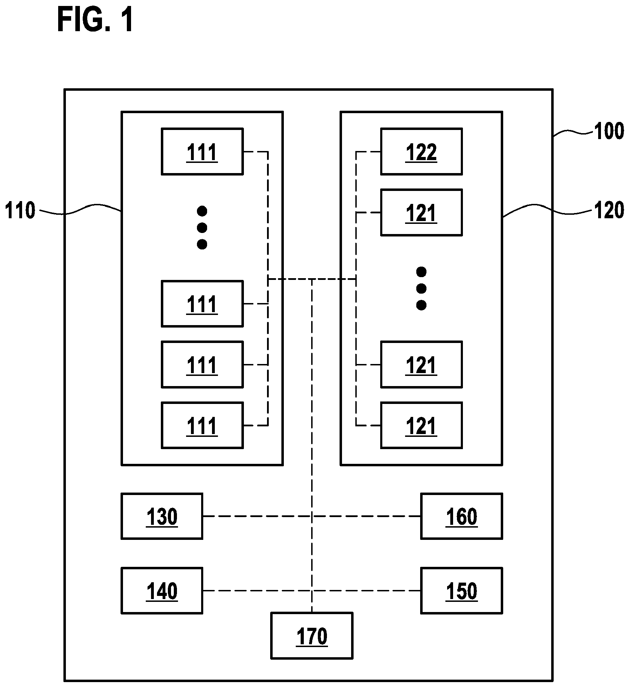

Figur 1 zeigt eine schematische Darstellung des erfindungsgemäßen Steuergeräts 100, welches ein aktives Speichermedium 110, ein passives Speichermedium 120, eine Datenpaketsteuerungseinheit 130 und eine Ausführungseinheit 140 umfasst. In einer alternativen Ausgestaltungsform umfasst das Steuergerät 100 zudem eine Schnittstelle 150 und/oder eine Erfassungseinheit 160 und/oder eine Plausibilisierungseinheit 170. Darüber hinaus umfasst das Steuergerät 100 eine Übertragungseinrichtung (hier als gepunktete Verbindung gezeigt) die dazu ausgebildet ist, Daten und/oder Signale zwischen den einzelnen Komponenten (110, 120, 130, 140, 150, 160, 170) zu übertragen.

Das aktive Speichermedium 110 umfasst eine Vielzahl von ersten Speichersektoren 111, wobei das aktive Speichermedium 110 einen ersten ausführbaren Programm-Code zum Betreiben des Steuergeräts 100 in Form von ersten Datenpaketen derart umfasst, dass jedes der ersten Datenpakete jeweils in einem ersten Speichersektor 111 gespeichert ist.

Das passive Speichermedium 120 umfasst eine Vielzahl von zweiten Speichersektoren 121, wobei das passive Speichermedium 120 einen zweiten ausführbaren Programm-Code zum Betreiben des Steuergeräts 100 in Form von zweiten Datenpaketen derart umfasst, dass jedes der zweiten Datenpakete jeweils in einem zweiten Speichersektor 121 gespeichert ist. Zudem umfasst das passive Speicherelement 120 wenigstens einen freien Speichersektor 122.

Die Datenpaketsteuerungseinheit 130 ist dazu ausgebildet, basierend auf dem erfindungsgemäßen Verfahren 300 den ersten Programm-Code und den zweiten Programm-Code auszutauschen. Dazu umfasst die Datenpaketsteuerungseinheit 130 bspw. einen Prozessor, Arbeitsspeicher und eine geeignete Software, welche dazu ausgebildet ist, dies zu steuern.

Die Ausführungseinheit 140 ist dazu ausgebildet, ein Betreiben des Steuergeräts 100 mittels des jeweils von dem aktiven Speichermedium 110 umfassten Programm-Code auszuführen. Dazu umfasst die Ausführungseinheit bspw. einen Prozessor, Arbeitsspeicher und eine geeignete Software, welche basierend auf dem ersten oder zweiten ausführen Programm-Code ein Signal erstellt und mittels einer geeigneten Schnittstelle dieses Signal derart bereitstellt, dass dieses Signal zum Betreiben einer mechanischen und/oder elektronischen Einheit verwendet werden kann.

Die Schnittstelle 150 ist dazu ausgebildet, den ersten und/oder zweiten Programm-Code zu senden und/oder zu empfangen. Hierzu umfasst die Schnittstelle 150 entweder selbst eine Sende- und/oder Empfangseinheit oder ist mit einer Sende- und/oder Empfangseinheit, welche nicht von dem Steuergerät 100 umfasst wird, mittels eines Kabels verbunden.

Die Erfassungseinheit 160 ist dazu ausgebildet zu erfassen, ob das Fahrzeug abhängig von dem ersten und/oder zweiten Programm-Code mittels des Steuergeräts 100 betrieben wird. Dazu umfasst die Erfassungseinheit 160 bspw. einen Prozessor, Arbeitsspeicher sowie eine geeignete Software, welche dazu ausgebildet ist, dies zu erfassen.

Die Plausibilisierungseinheit 170 ist dazu ausgebildet, ein Plausibilisieren 360 des zweiten Programm-Codes nach dem Austauschen auszuführen. Dazu umfasst die Plausibilisierungseinheit 170 bspw. einen Prozessor, Arbeitsspeicher sowie eine geeignete Software, welche dazu ausgebildet ist, dies zu plausibilisieren.

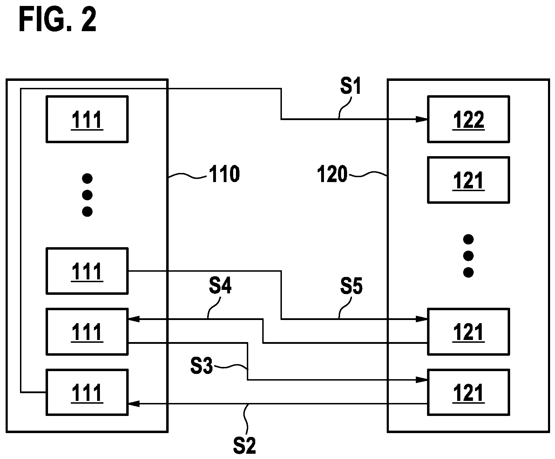

Figur 2 zeigt eine schematische Darstellung des erfindungsgemäßen Verfahrens 300 zum Austauschen eines ersten ausführbaren Programm-Codes und eines zweiten ausführbaren Programm-Codes. Dabei ist der erste ausführbare Programm-Code in Form von ersten Datenpaketen auf einem aktiven Speichermedium 110 hinterlegt, wobei das aktive Speichermedium 110 eine Vielzahl von ersten Speichersektoren 111 umfasst und wobei jedes der ersten Datenpakete jeweils in einem ersten Speichersektor 111 gespeichert ist. Der zweite ausführbare Programm-Code ist in Form von zweiten Datenpaketen auf einem passiven Speichermedium 120 hinterlegt, wobei das passive Speichermedium 120 eine Vielzahl von zweiten Speichersektoren 121 umfasst, wobei jedes der zweiten Datenpakete jeweils in einem zweiten Speichersektor 121 gespeichert ist, und wobei das passive Speicherelement wenigstens einen freien Speichersektor 122 umfasst.

In einem ersten Schritt S1 erfolgt ein Kopieren 310 eines ersten Datenpakets aus einem ersten Speichersektor 111 des aktiven Speichermediums 110 in den wenigstens einen freien Speichersektor 122 des passiven Speichermediums 120.

In einem Schritt S1' (in Figur 2 nicht dargestellt) erfolgt ein Leeren 320 des einen ersten Speichersektor 111 des aktiven Speichermediums 110, indem das eine erste Datenpaket aus dem einen ersten Speichersektor 111 gelöscht wird.

In einem Schritt S2 erfolgt ein Kopieren 330 eines zweiten Datenpakets aus einem zweiten Speichersektor 121 des passiven Speichermediums 120 in den geleerten ersten Speichersektor 111 des aktiven Speichermediums 110.

In einem Schritt S2' (in Figur 2 nicht dargestellt) erfolgt ein Leeren 340 des einen zweiten Speichersektors 121 des passiven Speichermediums 120, indem das eine zweite Datenpaket aus dem einen zweiten Speichersektor 121 gelöscht wird.

Wiederholtes Ausführen 350 der vorab genannten Schritte 310-340 (hier S3, S4, etc. wobei alle Zwischenschritt S3', S4', etc. in Figur 2 nicht gezeigt sind), bis alle ersten Datenpakete des ersten ausführbaren Programm-Codes auf dem passiven Speichermedium 120 und alle zweiten Datenpakete des zweiten ausführbaren Programm-Codes auf dem aktiven Speichermedium 110 hinterlegt sind, wobei das Kopieren 310, 330 eines ersten oder zweiten Datenpakets jeweils in einen vorab geleerten und/oder freien Speichersektor 111, 121, 122 erfolgt.

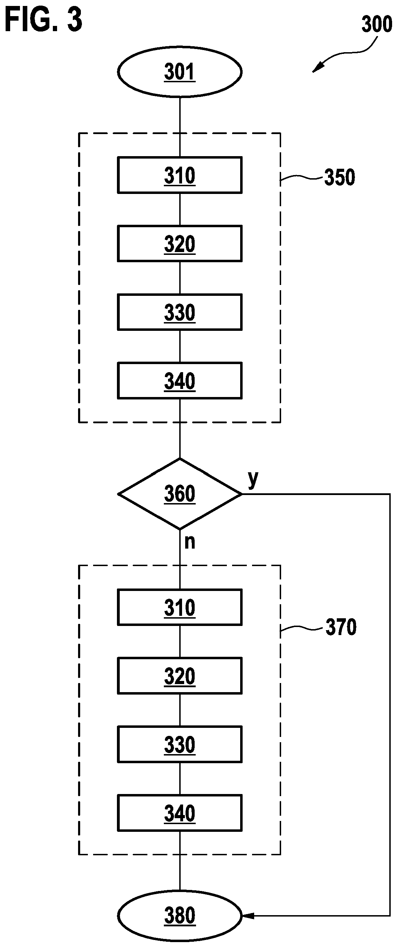

Figur 3 zeigt ein Ausführungsbeispiel eines Verfahrens 300 zum Austauschen eines ersten ausführbaren Programm-Codes und eines zweiten ausführbaren Programm-Codes auf einem Steuergerät 100, welches hier beispielhaft als Steuergerät 100 eines Fahrzeugs angenommen wird.

In Schritt 301 startet das Verfahren 300. Dies erfolgt beispielsweise indem mittels der Schnittstelle 150 ein zweiter ausführbarer Programm-Code empfangen und in dem - vorab leeren - passiven Speichermedium 120 gespeichert wird. In einer Ausführungsform wird alternativ oder zusätzlich vorab mittels der Erfassungseinheit 160 erfasst, ob ein Austauschen des ersten ausführbaren Programm-Codes und des zweiten ausführbaren Programm-Codes auf einem Steuergerät 100 erfolgen kann. Kann das Austauschen nicht erfolgen (beispielsweise da einer der beiden ausführen Programm-Codes aktiv ausgeführt wird), wird das Verfahren 300 nicht gestartet. Andernfalls wird das Verfahren gestartet und es folgt Schritt 310.

In Schritt 310 wird ein erstes Datenpaket aus einem ersten Speichersektor 111 des aktiven Speichermediums 110 in den wenigstens einen freien Speichersektor 122 des passiven Speichermediums 120 kopiert.

In Schritt 320 wird der eine erste Speichersektor 111 des aktiven Speichermediums 110 geleert, indem das eine erste Datenpaket aus dem einen ersten Speichersektor 111 gelöscht wird.

In Schritt 330 wird ein zweites Datenpaket aus einem zweiten Speichersektor 121 des passiven Speichermediums 120 in den geleerten ersten Speichersektor 111 des aktiven Speichermediums 110 kopiert.

In Schritt 340 wird der eine zweite Speichersektor 121 des passiven Speichermediums 120 geleert, indem das eine zweite Datenpaket aus dem einen zweiten Speichersektor 121 gelöscht wird.

Nachdem die Schritte 310, 320, 330 und 340 erstmalig ausgeführt wurden, erfolgt ein wiederholtes Ausführen 350 der vorab genannten Schritte 310, 320, 330 und 340 bis alle ersten Datenpakete des ersten ausführbaren Programm-Codes auf dem passiven Speichermedium 120 und alle zweiten Datenpakete des zweiten ausführbaren Programm-Codes auf dem aktiven Speichermedium 110 hinterlegt sind.

In einer möglichen Ausführungsform erfolgt anschließend Schritt 360, indem der zweite Programm-Code nach dem Austauschen plausibilisiert wird. Darunter ist beispielsweise einerseits zu verstehen, dass der zweite ausführbare Programm-Code auf seine Integrität hin überprüft wird und/oder andererseits auf seine Kompatibilität mit dem Rest des Steuergerätes und/oder andererseits auf seine Kompatibilität mit anderen Programm-Codes im Fahrzeug. Wird der zweite ausführbare Programm-Code als plausibel bestimmt, folgt anschließend Schritt 380. Andernfalls folgt Schritt 370.

In Schritt 370 wird das Austauschen rückgängig gemacht, indem die Schritte 310, 320, und 330 so lange wiederholt werden, bis erneut alle zweiten Datenpakete des zweiten ausführbaren Programm-Codes auf dem passiven Speichermedium 120 und alle ersten Datenpakete des ersten ausführbaren Programm-Codes auf dem aktiven Speichermedium 110, insbesondere in der für die Ausführung des ersten ausführbaren Programm-Codes richtigen Reihenfolge, hinterlegt sind.

In Schritt 380 endet das Verfahren 300.

## Patentansprüche

1. Verfahren (300) zum Austauschen eines ersten ausführbaren Programm-Codes und eines zweiten ausführbaren Programm-Codes, wobei der erste ausführbare Programm-Code in Form von ersten Datenpaketen auf einem aktiven Speichermedium (110) hinterlegt ist, wobei das aktive Speichermedium (110) eine Vielzahl von ersten Speichersektoren (111) umfasst, wobei jedes der ersten Datenpakete jeweils in einem ersten Speichersektor (111) gespeichert ist, wobei der zweite ausführbare Programm-Code in Form von zweiten Datenpaketen auf einem passiven Speichermedium (120) hinterlegt ist, wobei das passive Speichermedium (120) eine Vielzahl von zweiten Speichersektoren (121) umfasst, wobei jedes der zweiten Datenpakete jeweils in einem zweiten Speichersektor (121) gespeichert ist, wobei das passive Speicherelement wenigstens einen freien Speichersektor (122) umfasst, umfassend:
- Kopieren (310) eines ersten Datenpakets aus einem ersten Speichersektor (111) des aktiven Speichermediums (110) in den wenigstens einen freien Speichersektor (122) des passiven Speichermediums (120);
- Leeren (320) des einen ersten Speichersektor (111) des aktiven Speichermediums (110), indem das eine erste Datenpaket aus dem einen ersten Speichersektor (111) gelöscht wird;
- Kopieren (330) eines zweiten Datenpakets aus einem zweiten Speichersektor (121) des passiven Speichermediums (120) in den geleerten ersten Speichersektor (111) des aktiven Speichermediums (110);
- Leeren (340) des einen zweiten Speichersektors (121) des passiven Speichermediums (120), indem das eine zweite Datenpaket aus dem einen zweiten Speichersektor (121) gelöscht wird; und
- Wiederholtes Ausführen (350) der vorab genannten Schritte (310-340), bis alle ersten Datenpakete des ersten ausführbaren Programm-Codes auf dem passiven Speichermedium (120) und alle zweiten Datenpakete des zweiten ausführbaren Programm-Codes auf dem aktiven Speichermedium (110) hinterlegt sind, wobei das Kopieren (310, 330) eines ersten oder zweiten Datenpakets jeweils in einen vorab geleerten und/oder freien Speichersektor (111, 121, 122) erfolgt.

2. Verfahren (300) nach Anspruch 1, **dadurch gekennzeichnet, dass** das aktive Speichermedium (110) und das passive Speichermedium (120) von einem Steuergerät (100), welches zum Betreiben eines Fahrzeugs ausgebildet ist, umfasst werden und das Verfahren (300) dazu ausgebildet ist, den ersten Programm-Code zum Betreiben des Fahrzeugs mittels des Steuergeräts (100) und den zweiten Programm-Code zum Betreiben des Fahrzeugs mittels des Steuergeräts (100) auszutauschen, wobei das Verfahren (300) insbesondere dann durchgeführt wird, wenn das Steuergerät (100) temporär nicht zum Betreiben des Fahrzeugs verwendet wird.

3. Verfahren (300) nach Anspruch 1, **dadurch gekennzeichnet, dass** ein Schritt des Plausibilisierens (360) des zweiten Programm-Codes nach dem Austauschen vorgesehen ist, wobei ein rückgängiges Austauschen (370) ausgeführt wird, wenn das Plausibilisieren (360) fehlschlägt.

4. Steuergerät (100) umfassend:
- ein aktives Speichermedium (110), wobei das aktive Speichermedium (110) eine Vielzahl von ersten Speichersektoren (111) umfasst, wobei das aktive Speichermedium (110) einen ersten ausführbaren Programm-Code zum Betreiben des Steuergeräts (100) in Form von ersten Datenpaketen derart umfasst, dass jedes der ersten Datenpakete jeweils in einem ersten Speichersektor (111) gespeichert ist;
- ein passives Speichermedium (120), wobei das passive Speichermedium (120) eine Vielzahl von zweiten Speichersektoren (121) umfasst, wobei das passive Speichermedium (120) einen zweiten ausführbaren Programm-Code zum Betreiben des Steuergeräts (100) in Form von zweiten Datenpaketen derart umfasst, dass jedes der zweiten Datenpakete jeweils in einem zweiten Speichersektor (121) gespeichert ist, wobei das passive Speicherelement (120) wenigstens einen freien Speichersektor (122) umfasst;
- eine Datenpaketsteuerungseinheit (130), welche dazu ausgebildet ist, basierend auf einem Verfahren (300) gemäß Anspruch 1 den ersten Programm-Code und den zweiten Programm-Code auszutauschen; und
- eine Ausführungseinheit (140), welche dazu ausgebildet ist, ein Betreiben des Steuergeräts (100) mittels des jeweils von dem aktiven Speichermedium (110) umfassten Programm-Code auszuführen.

5. Steuergerät (100) nach Anspruch 4, **dadurch gekennzeichnet, dass** das Steuergerät (100) eine Schnittstelle (150) umfasst, welche dazu ausgebildet ist, den ersten und/oder zweiten Programm-Code zu senden und/oder zu empfangen.

6. Steuergerät (100) nach Anspruch 4, **dadurch gekennzeichnet, dass** das Steuergerät (100) von einem Fahrzeug umfasst wird und das Steuergerät (100) dazu ausgebildet ist, das Fahrzeug mittels des ersten und/oder zweiten Programm-Codes zu betreiben.

7. Steuergerät (100) nach Anspruch 6, **dadurch gekennzeichnet, dass** das Steuergerät (100) eine Erfassungseinheit (160), welche erfasst, ob das Fahrzeug abhängig von dem ersten und/oder zweiten Programm-Code mittels des Steuergeräts (100) betrieben wird, umfasst und die Datenpaketsteuerungseinheit (130) nur dann ein Austauschen des ersten Programm-Codes und des zweiten Programm-Codes ausführt, wenn das Fahrzeug nicht abhängig von dem ersten und/oder zweiten Programm-Code mittels des Steuergeräts (100) betrieben wird.

8. Steuergerät (100) nach Anspruch 4, **dadurch gekennzeichnet, dass** das Steuergerät (100) eine Plausibilisierungseinheit (170) umfasst, welche dazu ausgebildet ist, ein Plausibilisieren (360) des zweiten Programm-Codes nach dem Austauschen auszuführen, wobei mittels der Datenpaketsteuerungseinheit (130) ein rückgängiges Austauschen (370) ausgeführt wird, wenn das Plausibilisieren (360) fehlschlägt.

## Claims

1. Method (300) for interchanging a first executable program code and a second executable program code, the first executable program code being stored in the form of first data packets on an active storage medium (110), the active storage medium (110) comprising a multiplicity of first storage sectors (111), each of the first data packets being stored in a particular first storage sector (111), the second executable program code being stored in the form of second data packets on a passive storage medium (120), the passive storage medium (120) comprising a multiplicity of second storage sectors (121), each of the second data packets being stored in a particular second storage sector (121), wherein the passive storage element comprises at least one free storage sector (122), comprising:
- copying (310) a first data packet from a first storage sector (111) of the active storage medium (110) to the at least one free storage sector (122) of the passive storage medium (120);
- emptying (320) the one first storage sector (111) of the active storage medium (110) by erasing the one first data packet from the one first storage sector (111);
- copying (330) a second data packet from a second storage sector (121) of the passive storage medium (120) to the emptied first storage sector (111) of the active storage medium (110);
- emptying (340) the one second storage sector (121) of the passive storage medium (120) by erasing the one second data packet from the one second storage sector (121); and
- repeatedly performing (350) the aforementioned steps (310-340) until all first data packets of the first executable program code are stored on the passive storage medium (120) and all second data packets of the second executable program code are stored on the active storage medium (110), a first or second data packet being copied (310, 330) to a previously emptied and/or free storage sector (111, 121, 122) in each case.

2. Method (300) according to Claim 1, **characterized in that** the active storage medium (110) and the passive storage medium (120) are comprised by a control unit (100) that is designed to operate a vehicle, and the method (300) is designed to interchange the first program code for operating the vehicle by means of the control unit (100) and the second program code for operating the vehicle by means of the control unit (100), the method (300) being carried out in particular when the control unit (100) is temporarily not used for operating the vehicle.

3. Method (300) according to Claim 1, **characterized in that** there is provision for a step comprising a plausibility check (360) on the second program code after the interchange, wherein a reverse interchange (370) is performed if the plausibility check (360) fails.

4. Control unit (100) comprising:
- an active storage medium (110), the active storage medium (110) comprising a multiplicity of first storage sectors (111), the active storage medium (110) comprising a first executable program code for operating the control unit (100) in the form of first data packets in such a way that each of the first data packets is stored in a particular first storage sector (111);
- a passive storage medium (120), the passive storage medium (120) comprising a multiplicity of second storage sectors (121), the passive storage medium (120) comprising a second executable program code for operating the control unit (100) in the form of second data packets in such a way that each of the second data packets is stored in a particular second storage sector (121), wherein the passive storage element (120) comprises at least one free storage sector (122);
- a data packet control unit (130) designed to take a method (300) according to Claim 1 as a basis for interchanging the first program code and the second program code; and
- a performance unit (140) designed to perform operation of the control unit (100) by means of the particular program code comprised by the active storage medium (110).

5. Control unit (100) according to Claim 4, **characterized in that** the control unit (100) comprises an interface (150) designed to send and/or receive the first and/or second program code.

6. Control unit (100) according to Claim 4, **characterized in that** the control unit (100) is comprised by a vehicle and the control unit (100) is designed to operate the vehicle by means of the first and/or second program code.

7. Control unit (100) according to Claim 6, **characterized in that** the control unit (100) comprises a detection unit (160) that detects whether the vehicle is operated on the basis of the first and/or second program code means of the control unit (100), and the data packet control unit (130) interchanges the first program code and the second program code only when the vehicle is not operated on the basis of the first and/or second program code by means of the control unit (100) .

8. Control unit (100) according to Claim 4, **characterized in that** the control unit (100) comprises a plausibility checking unit (170) designed to perform a plausibility check (360) on the second program code after the interchange, the data packet control unit (130) being used to perform a reverse interchange (370) if the plausibility check (360) fails.

## Revendications

1. Procédé (300) permettant d'échanger un premier code de programme exécutable et un deuxième code de programme exécutable, dans lequel le premier code de programme exécutable est enregistré sous forme de premiers paquets de données sur un support de stockage actif (110), le support de stockage actif (110) comprenant une pluralité de premiers secteurs de stockage (111), chacun des premiers paquets de données étant enregistré respectivement dans un premier secteur de stockage (111), dans lequel le deuxième code de programme exécutable est enregistré sous forme de deuxièmes paquets de données sur un support de stockage passif (120), le support de stockage passif (120) comprenant une pluralité de deuxièmes secteurs de stockage (121), chacun des deuxièmes paquets de données étant enregistré respectivement dans un deuxième secteur de stockage (121), l'élément de stockage passif comprenant au moins un secteur de stockage libre (122), comprenant les étapes consistant à :
- copier (310) un premier paquet de données d'un premier secteur de stockage (111) du support de stockage actif (110) dans ledit au moins un secteur de stockage libre (122) du support de stockage passif (120) ;
- vider (320) ledit un premier secteur de stockage (111) du support de stockage actif (110) en ce que ledit un premier paquet de données est supprimé dudit un premier secteur de stockage (111) ;
- copier (330) un deuxième paquet de données d'un deuxième secteur de stockage (121) du support de stockage passif (120) dans le premier secteur de stockage vidé (111) du support de stockage actif (110) ;
- vider (340) ledit un deuxième secteur de stockage (121) du support de stockage passif (120) en supprimant ledit un deuxième paquet de données dudit un deuxième secteur de stockage (121) ; et
- exécuter (350) de manière répétée lesdites étapes (310 à 340) jusqu'à ce que tous les premiers paquets de données du premier code de programme exécutable aient été enregistrés sur le support de stockage passif (120) et que tous les deuxièmes paquets de données du deuxième code de programme exécutable aient été enregistrés sur le support de stockage actif (110), la copie (310, 330) d'un premier ou d'un deuxième paquet de données étant respectivement effectuée dans un secteur de stockage (111, 121, 122) préalablement vidé et/ou libre.

2. Procédé (300) selon la revendication 1, **caractérisé en ce que** le support de stockage actif (110) et le support de stockage passif (120) sont réalisés par un appareil de commande (100) qui est réalisé pour faire fonctionner un véhicule, et le procédé (300) est réalisé pour échanger le premier code de programme servant à faire fonctionner le véhicule au moyen de l'appareil de commande (100) et le deuxième code de programme servant à faire fonctionner le véhicule au moyen de l'appareil de commande (100), dans lequel le procédé (300) est en particulier exécuté lorsque l'appareil de commande (100) n'est temporairement pas utilisé pour faire fonctionner le véhicule.

3. Procédé (300) selon la revendication 1, **caractérisé en ce qu'**une étape consistant à établir la plausibilité (360) du deuxième code de programme est prévue après l'échange, dans lequel un échange inverse (370) est exécuté si l'établissement de la plausibilité (360) échoue.

4. Appareil de commande (100), comprenant :
- un support de stockage actif (110), le support de stockage actif (110) comprenant une pluralité de premiers secteurs de stockage (111), le support de stockage actif (110) comprenant un premier code de programme exécutable, servant à faire fonctionner un appareil de commande (100), sous forme de premiers paquets de données de telle sorte que chacun des premiers paquets de données est enregistré respectivement dans un premier secteur de stockage (111) ;
- un support de stockage passif (120), le support de stockage passif (120) comprenant une pluralité de deuxièmes secteurs de stockage (121), le support de stockage passif (120) comprenant un deuxième code de programme exécutable, servant à faire fonctionner l'appareil de commande (100), sous forme de deuxièmes paquets de données de telle sorte que chacun des deuxièmes paquets de données est enregistré respectivement dans un deuxième secteur de stockage (121), l'élément de stockage passif (120) comprenant au moins un secteur de stockage libre (122) ;
- une unité de commande de paquet de données (130) qui est réalisée pour échanger le premier code de programme et le deuxième code de programme sur la base d'un procédé (300) selon la revendication 1 ; et
- une unité d'exécution (140) qui est réalisée pour faire fonctionner l'appareil de commande (100) au moyen du code de programme respectivement compris dans le support de stockage actif (110).

5. Appareil de commande (100) selon la revendication 4, **caractérisé en ce que** l'appareil de commande (100) comprend une interface (150) qui est réalisée pour émettre et/ou recevoir le premier et/ou le deuxième code de programme.

6. Appareil de commande (100) selon la revendication 4, **caractérisé en ce que** l'appareil de commande (100) est compris dans un véhicule, et l'appareil de commande (100) est réalisé pour faire fonctionner le véhicule au moyen du premier et/ou du deuxième code de programme.

7. Appareil de commande (100) selon la revendication 6, **caractérisé en ce que** l'appareil de commande (100) comprend une unité de détection (160) qui détecte si le véhicule fonctionne en fonction du premier et/ou du deuxième code de programme au moyen de l'appareil de commande (100), et l'unité de commande de paquet de données (130) n'exécute un échange du premier code de programme et du deuxième code de programme que si le véhicule ne fonctionne pas en fonction du premier et/ou du deuxième code de programme au moyen de l'appareil de commande (100).

8. Appareil de commande (100) selon la revendication 4, **caractérisé en ce que** l'appareil de commande (100) comprend une unité d'établissement de la plausibilité (170) qui est réalisée pour établir la plausibilité (360) du deuxième code de programme après l'échange, l'unité de commande de paquet de données (130) effectuant un échange inverse (370) si l'établissement de la plausibilité (360) échoue.
